Europäisches Patentamt

European Patent Office

Office européen des brevets

(19)

(11) EP 1 148 067 A1

(12) **EUROPEAN PATENT APPLICATION**

(43) Date of publication:
**24.10.2001 Bulletin 2001/43**

(21) Application number: **00201399.3**

(22) Date of filing: **18.04.2000**

(51) Int Cl.$^7$: **C08B 30/06**, C08B 30/20,
C08B 35/00, C08B 35/02,
C08B 35/04, C08B 35/06,
C08B 35/08

(84) Designated Contracting States:
**AT BE CH CY DE DK ES FI FR GB GR IE IT LI LU
MC NL PT SE**
Designated Extension States:
**AL LT LV MK RO SI**

(71) Applicant: **Coöperatieve Verkoop- en
Productievereniging van Aardappelmeel en
Derivaten 'AVEBE' B.A.
NL-9641 JA Veendam (NL)**

(72) Inventors:
• **Kesselmans, Ronald Peter Wilhelmus
9468 HK Annen (NL)**
• **Venema, Berend
9461 NE Veendam (NL)**
• **Hadderingh, Egbert
9642 JT Veendam (NL)**

(74) Representative: **Prins, Adrianus Willem et al
Vereenigde,
Nieuwe Parklaan 97
2587 BN Den Haag (NL)**

(54) **Extrusion of high amylopectin starch**

(57) The invention relates to the field of processing starch. In particular, the invention relates to a process for extruding high amylopectin starch to obtain a starch product having a certain intrinsic viscosity when dissolved or dispersed in water, which process requires less specific mechanical energy input than conventional extrusions of starch.

EP 1 148 067 A1

**Description**

The invention relates to the processing of starch, in particular of amylopectin starch.

Starches are widely used in technical applications, like paper, textile, adhesives, oil well drilling, water treatment and in the construction industry, as well as in food applications, e.g. as thickeners, bodying agents or gelling agents. Their use results in starch-thickened foods being any fluid, pasty or semi-solid food product in which a, preferably native, starch-based thickening agent is used to impart a degree of thickening. Examples of such food products include, sauces, soups, gravies, creams and the like.

Starch consists of granules which have ordered structures which are semicrystalline and birefringent. Chemically, starches mainly consist of two types of polysaccharides, amylose and amylopectin. Amylose is an essentially linear 1-4 linked alpha-D-glucose polymer and amylopectin is a highly branched macromolecule consisting of short chains of 1-4 linked alpha-D-glucose with 1-6 linkages.

When starch granules are heated in water at a specific temperature (i.e. the gelatinization temperature, usually about 55-70°C), the granules swell irreversibly and the amylose is preferentially solubilized. During this gelatinization, the granule's birefringence and crystallinity disappear and a viscous solubilized paste is formed. The swollen starch granules, upon cooling to room temperature, show a strong tendency to associate with each other through hydrogen-bonding between hydroxyl groups. This phenomenon is called retrogradation. In dilute starch solutions the amylose slowly aligns itself in parallel fashion to give insoluble bundles, which render the solution opaque and may cause precipitates. In more concentrated solutions (about 5 wt.% and higher) the amylose molecules associate in random fashion and give a reticulated network of a gel.

Extrusion was first introduced in the starch industry as an alternative to processing starch using drum dryers to render the starch soluble at low temperatures. Using drum dryers, a suspension of starch and water, optionally pretreated with chemicals to prepare a certain starch derivative, was brought to a temperature of about 100°C on an internally heated drum dryer. Later it was found that this procedure could be carried out in an extruder in a more energy effective manner, and thus in a more cost effective manner than on drum dryers.

Meanwhile, extrusion of starch has become a widely adopted technique in the starch and food industries for preparing various starch and starch containing products. Examples of such products include pasta, snacks, confectionery, chewing gum, chocolate, gom based products, animal feed, and the like. In this regard, reference is made to *inter alia* the article of Wiedmann, Starch, 39 91987), pp. 352-357.

Extrusion of starch is also widely used in technical industries for instance for preparing cold water soluble starches and cold water soluble starch containing products. Examples of such products are used in the wet end of the paper manufacturing process, coating, sizing, or used as dyestuff, in bag adhesives, as drilling fluids and as self-leveling agents.

As reducing the amount of energy has been a major driving force in the replacement of more conventional apparatus, such as drum dryers, cookers, ovens, and the like, by extruders, it will be clear that the provision of a novel process wherein the extrusion of starch requires even less energy would be considered highly desirable in the field.

The present invention is based on the surprising insight that for extruding a certain amount of amylopectin starch to obtain a starch product having a certain, desired intrinsic viscosity when dissolved or dispersed in water, a significantly smaller amount of energy is required, when compared with the extrusion of the same amount of regular starch to obtain a starch product having the same intrinsic viscosity. In other words, by using amylopectin starch instead of regular starch in an extrusion process, a large reduction in energy is attained.

The invention thus relates to a process for preparing a starch product, which has in aqueous solution or dispersion an intrinsic viscosity (IV), which process comprises extruding a starch comprising at least 95 wt.%, based on dry substance, of amylopectin, using a specific mechanical energy input (SME), wherein SME $\leq$ 1.32 * (1/IV$_{product}$ - 1/IV$_{starch}$). IV$_{product}$ stands for the intrinsic viscosity of the starch product to be prepared and IV$_{starch}$ stands for the intrinsic viscosity of the starch that is used as the starting material.

The intrinsic viscosity is expressed in dl/g and may be determined in any known manner, for instance as described by H.W. Leach in Cereal Chemistry, vol. 40, page 595 (1993) using an Ubbelohde viscometer and a 1M sodium hydroxide solution in water as a solvent. The intrinsic viscosity provides a measure for the molecular weight and thus for the extent of the mechanical degradation of the starch. Extrusion of starch at a certain shear level leads to a decrease in molecular weight. This phenomenon can be described as a reciprocal expression (1/IV). The difference between the reciprocal intrinsic viscosity of the end product and the reciprocal intrinsic viscosity of the starting material (d1/IV) is caused by mechanical energy. To compare the energy input at different shear levels, this difference is divided by the specific mechanical energy (SME).

Most starches typically consist of granules in which two types of glucose polymers are present. These are amylose (15-35 wt.% on dry substance) and amylopectin (65-85 wt.% an dry substance). Amylose consists of unbranched or slightly branched molecules having an average degree of polymerization of 100 to 5000, depending on the starch type. Amylopectin consists of very large, highly branched molecules having an average degree of polymerization of 1,000,000 or more. The commercially most important starch types (maize starch, potato starch, wheat starch and tapioca starch) contain 15 to 30 wt.% amylose. Of some cereal types, such as barley, maize, millet, wheat, milo, rice and sorghum, there are varieties of which the starch granules nearly completely consist of amylopectin. Calculated as weight percent on dry substance, these starch granules contain more than 95%, and usually more than 98% of amylopectin. The amylose content of these cereal starch, granules is therefore less than 5%, and usually less than 2%. The above cereal varieties are also referred to as waxy cereal grains, and the amylopectin starch granules isolated therefrom as waxy cereal starches.

In contrast to the situation of different cereals, root and tuber varieties of which the starch granules nearly exclusively consist of amylopectin are not known in nature. For instance, potato starch granules isolated from potato tubers usually contain, about 20% amylose and 80 % amylopectin (wt.% on dry substance). During the past 10 years, however, successful efforts have been made to cultivate by genetic modification potato plants which, in the potato tubers, form starch granules consisting for more than 95 wt.% (on dry substance) of amylopectin. It has even been found feasible to produce potato tubers comprising substantially only amylopectin.

In the formation of starch granules, different enzymes are catalytically active. Of these enzymes, the granule bound starch synthase (GBSS) is involved in the formation of amylose. The presence of the GBSS enzyme depends an the activity of genes encoding for said GBSS enzyme. Elimination or inhibition of the expression of these specific genes results in the production of the GBSS enzyme being prevented or limited. The elimination of these genes can be realized by genetic modification of potato plant material or by recessive mutation. An example thereof is the amylose-free mutant of the potato (amf) of which the starch substantially only contains amylopectin through a recessive mutation in the GBSS gene. This mutation technique is described in, inter alia, J.H.M. Hovenkamp-Hermelink et al., "Isolation of amylose-free starch mutant of the potato (Solanum. tuberosum L.)", Theor. Appl. Gent., (1987), 75:217-221" and E. Jacobsen et. al., "Introduction of an amylose-free (amf), mutant- into breeding of cultivated potato, Solanum tuberosum L., Euphytica,(1991),: 53:247-253.

Elimination or inhibition of the expression of the GBSS gene in the potato is also possible by using so-called antisense inhibition. This genetic modification of the potato is described in R.G.F. Visser et al., "Inhibition of the expression of the gene for granule-bound starch synthase in potato by antisense constructs", Mol. Gen. Genet.,(1991), 225:289-296.

By using genetic modification, it has been found possible to cultivate and breed roots and tubers, for instance potato, yam, or cassava (Patent South Africa 97/4383), of which the starch granules contain little or no amylose. Herein, the term amylopectin starch refers to starch isolated from its natural source and having an amylopectin content of at least 95 wt.%, preferably at least 98 wt.%, based on dry substance.

Regarding production possibilities and properties, there are significant differences between amylopectin potato starch on the one hand, and the waxy cereal starches on the other hand. This particularly applies to waxy maize starch, which is commercially by far the most important waxy cereal starch. The cultivation of waxy maize, suitable for the production of waxy maize starch is not commercially feasible in countries having a cold or temperate climate, such as The Netherlands, Belgium, England, Germany, Poland, Sweden and Denmark. The climate in these countries, however, is suitable for the cultivation of potatoes. Tapioca starch, obtained from cassava, may be produced in countries having a warm and moist climate, such as is found in regions of South East Asia and South America.

The composition and properties of root and tuber starch, such as amylopectin potato starch and amylopectin tapioca starch, differs from those of the waxy cereal starches. Amylopectin potato starch has a much lower content of lipids and proteins than the waxy cereal starches. Problems regarding off taste an odor and foaming, which, because of the lipids and/or proteins, may occur when using waxy cereal starch products (native and modified), do not occur, or occur to a much lesser degree when using corresponding amylopectin potato or tapioca starch products. In contrast to the waxy cereal starches, amylopectin potato starch contains chemically bound phosphate groups. As a result, amylopectin potato starch products in a dissolved state have a distinct poly-electrolyte character.

Yet another important difference between amylopectin starches from potato and tapioca and waxy maize starch is the average chain length of the highly branched amylopectin molecules. Waxy maize starch has an average chain length of about 23 anhydroglucose units, amylopectin tapioca and potato starch of 28 and 29 anhydroglucose units respectively.

The amylopectin starch extruded in accordance with the invention is preferably a root or tuber starch, more preferably potato or tapioca starch. When compared to cereal and fruit starches, the products obtained using root or tuber starches are less colored, have less odor and less (or no) foaming properties. Particularly the latter may give rise to problems during the application of products based on cereal or fruit starches.

The starch that is extruded may also be a starch derivative. Possible examples of starch derivatives include starch esters, starch ethers, oxidized starches, dextrins and the like. These derivatives may be prepared using well known techniques. An overview of how the starch derivatives may be prepared can be found in for instance O.B. Wurzburg, Modified starches: properties and uses, CRC Press, Boca Raton 1986. Of course it is possible to derivatize the starch before or during extrusion. The latter possibility will be discussed in more detail herein below.

In accordance with the invention, the term extrusion is defined as a process wherein a substance is pressed through a nozzle. The diameter of the nozzle at least partially determines the degree of shear during extrusion. The transport of the substance, as well as the build up of the pressure required in the process, may be accomplished by the aid of one or more screws. The conditions within an extruder typically comprise high temperature and pressure (shear).

In accordance with the invention, in principle any conventional type of extruder may be employed. Examples include, but are not limited to single screw extruders, twin screw extruders, both tangential and intermeshing. In a twin screw extruder the screws may be co-rotating or counter-rotating. Also, the screws may be (partly) self-wiping, cylindrical and/or conical. The extruder may optionally comprise varying pitches, varying cores, threaded or conical barrels, and/or alternating pin-type screws. In a preferred embodiment, a twin screw self-wiping co-rotating extruder is used.

The conditions during extrusion in accordance with the invention can generally be chosen similar to those in known extrusion processes of starch. Typically, these conditions encompass a water content of 10-45%, a temperature of 80-200°C, a screw speed of 25-800 rpm, and a die opening having a diameter of 1-16 mm. Preferably, the water content is 15-40%, more preferably 20-30%. The temperature is preferably between 110 and 180°C, more preferably 120-160°C. The screw speed preferably lies between 50 and 500 rpm, more preferably between 100 and 400 rpm, while the diameter of the die opening is preferably 2-14 mm, more preferably 3-12 mm.

In general, extrusion is, in accordance with the invention, carried out in order to attain a starch product having a certain desired viscosity when dissolved or dispersed in water. Principally, the aim of extrusion of starch is to obtain a cold water soluble starch product and to adapt the viscosity in a very economically attractive manner. In the context of the present invention, the objective viscosity of the starch is defined in terms of the parameter intrinsic viscosity. This parameter is defined as (relative viscosity-1)/concentration, wherein the concentration is extrapolated to zero.

As has been mentioned above, it is one of the great advantages of the invention that significantly less energy is required for effecting a certain increase in intrinsic viscosity of starch by extrusion when compared to conventional extrusions of starch. In accordance with the invention, this difference is expressed in terms of a Specific Mechanical Energy (SME), i.e. an amount of energy used for processing one gram of starch at a certain point in time. This parameter is defined by the following equation:

$$\text{SME (KJ/g)} = (Md_{act} - Md_{null}) * (RPM_{act} / RPM_{max}) * P_{max} / (100 * m),$$

wherein

$Md_{act}$ = Actual torque (% from maximum power main drive delivered at the actual screw speed, expressed in kW)
$Md_{null}$ = Torque by empty extruder
$RPM_{act}$ = Actual screw speed $min^{-1}$ (extuder panel)
$RPM_{max}$ = Maximum screw speed $min^{-1}$
$P_{max}$ = Maximum power main drive (kW)
m = Total mass flow (g/sec).

The value of $(1/IV_{product} - 1/IV_{starch})/\text{SME}$ is in accordance with the invention greater than or equal to 0.76, preferably greater than or equal to 0.8, and more preferably greater than or equal to 0.9.

Md and RPM may be measured and registered at the control panel of the extruder. The mass flow (dry substance) is the total amount of starch and the injected fluids, and possible additives such as a plasticizer, which are all pre-calibrated and totaled. Solids are preferably fed into the extruder by a gravimetric feeder. The injection of fluids is preferably controlled by a mass flow meter.

In a preferred embodiment, the starch is converted to a starch derivative during extrusion. During extrusion, starch may be derivatized using any type of conventional reagent to produce a starch derivative of a certain desired type. Examples of such reagents include, but are not limited to, acetic anhydride, n-octenyl succinic anhydride, vinyl acetate, sodium trimetaphosphate, phosphorous oxychloride, dichloroacetic acid, or other reagents containing two or more anhydride, halogen, halohydrin epoxide or glycidyl groups, chloroacetic acid and its salts, adipic anhydride, ethylene or propylene oxide, epichlorohydrin, cationic epoxides or precursors thereof, oxidators and acids. In order to achieve a derivatization reaction during extrusion, starch reagents and optional catalysts are mixed into the extruder or by an external mixer, after which the extrusion may be carried out as set forth above.

The products obtained after extrusion in accordance with the invention may be used for applications in the food, textile, paper, drilling, adhesive and water treatment industries.

The invention will now be elucidated by the following, non-restrictive examples.

## Example 1

Extrusion of starch

The experiments were performed on a twin screw-co-rotating extruder (model Continua 37) manufactured by Werner and Pfleiderer with a L/D ratio of 16 (L=length, D=diameter). A module of 2 reverse screw elements was located at 10D of the feeding section. The screw speed could be varied from 50 to 400 RPM. The barrel had four temperature-controlled sections. The first two sections were cooled with water, the others were heated with oil. One die plate was used with a length of 2 mm. and either with two holes of 1.5 mm. diameter or two holes of 3.0 mm. A rotating knife was used to cut the extrudate as it emerged from the die. The extrudates were dried in a drying oven at 30-35°C for 20h. In preparation for analysis the dried samples were ground to a particle size less than 1000 μm using a hammer mill (model 200AN 907017) manufactured by Peppink (Deventer).

Starch was fed into the extruder by a twin-screw gravimetric feeder (Fab.nr. 1923-100) manufactured by ARBO. Water was injected through a drilled thermocouple point at a distance of 4D from the feeding section by a diaphragm pump (model M210) manufactured by LEWA. Moisture contents were 20-30%, the total feed rates were 10-20 kg/h and the barrel temperatures were 125 or 160°C.

The product temperature (TP), the product pressure (PP), the screw speed (RPM) and the torque occurring at the screw shafts (Md) were controlled from a remote panel (Werner and Pfleiderer). Potato starch (PS), amylopectin potato starch (APS), maize starch (MS) and amylopectin maize starch (AMS) were used for the experiments. The starches were extruded at three different shear levels; low, medium and high. The shear level can be changed by altering the screw speed, mass-flow, moisture content, die opening and barrel temperature.

Table 1:

| Different shear levels | | | | | |
|---|---|---|---|---|---|
| shear level | RP M | massflow kg/h | Moisture content(%) | die opening | barrel temp.°C |
| Low | 50 | 10 | 30 | 2*3 mm | 160 |
| Medium | 300 | 15 | 26 | 2*3 mm | 160 |
| High | 300 | 20 | 20 | 2*1.5 mm | 125 |

From the settings of the extruder and the mass-flow the specific mechanical energy input (SME) can be calculated The SME is defined by the following relation:

$$SME \text{ (KJ/g)} = (Md_{act} - Md_{null}) * (RPM_{act}/ RPM_{max}) * P_{max} / (100 * m),$$

wherein

$Md_{act}$ = Actual torque (% from maximum power main drive delivered at the actual screw speed, expressed in kW)
$Md_{null}$ = Torque by empty extruder
$RPM_{act}$ = Actual screw speed $min^{-1}$ (extuder panel)
$RPM_{max}$ = Maximum screw speed $min^{-1}$ (= 400 $min^{-1}$)
$P_{max}$ = Maximum power main drive (= 7.6kW)
m = Total mass flow (g/sec).

Table 2:

| Extrusion of starch | | | | | | | | | |
|---|---|---|---|---|---|---|---|---|---|
| Starch | Shear level | Md act. | SME | TP | PP | A IV | B 1/IV | C Delta | D Delta/SME |
| APS | Low | 51 | 0.230 | 108 | 18 | 1.37 | 0.730 | 0.330 | 1.437 |
| PS | Low | 65 | 0.298 | 118 | 30 | 1.95 | 0.13 | 0.113 | 0.379 |
| WMS | Low | 48 | 0.215 | 106 | 12 | 1.39 | 0.719 | 0.129 | 0.602 |
| MS | Low | 59 | 0.269 | 112 | 20 | 1.28 | 0.781 | 0.191 | 0.712 |

Table 2: (continued)

| Extrusion of starch | | | | | | | | | |
|---|---|---|---|---|---|---|---|---|---|
| Starch | Shear level | Md act. | SME | TP | PP | A IV | B 1/IV | C Delta | D Delta/SME |
| | | | | | | | | | |
| APS | medium | 38 | 0.629 | 136 | 16 | 0.93 | 1.075 | 0.675 | 1.074 |
| PS | medium | 44 | 0.739 | 148 | 20 | 1.65 | 0.606 | 0.206 | 0.279 |
| | | | | | | | | | |
| APS | high | 71 | 0.859 | 163 | 52 | 0.83 | 1.205 | 0.805 | 0.937 |
| PS | high | 76 | 0.923 | 172 | 53 | 0.91 | 1.099 | 0.699 | 0.757 |
| WMS | high | 64 | 0.770 | 154 | 43 | 0.75 | 1.333 | 0.743 | 0.966 |
| MS | high | 74 | 0.898 | 170 | 55 | 1.00 | 1.000 | 0.410 | 0.457 |
| A: Intrinsic viscosity (IV)<br>B: 1/IV<br>C: Delta = 1/Iv$_{extruded\ product}$ - 1/Iv$_{starting\ material}$<br>D: C/SME | | | | | | | | | |

## Example 2

### Carboxymethylation of starch in an extruder

In this example the extruder of example 1 was employed. Instead of native starch a mixture of starch and sodium momochloroacetate (SMCA) was used. The extrusion mixture was prepared by mixing starch and SMCA in a blender with dispersion blades manufactured by Patterson-Kelly Co. during 10 minutes. During extrusion a solution of sodium hydroxide in stead of water was injected at a distance of 4D of the feeding section.

Table 3:

| Carboxymethylation of starch in the extruder (DS$_{COOH}$ is approx. 0.1) | | | | | | | | | |
|---|---|---|---|---|---|---|---|---|---|
| Starch | shear level | Md act. | SME | TP | PP | A IV | B 1/IV | C Delta | D Delta/SME |
| APS | medium | 38 | 0.629 | 137 | 16 | 0.95 | 1.053 | 0.653 | 1.038 |
| PS | medium | 43 | 0.721 | 152 | 18 | 1.53 | 0.654 | 0.254 | 0.352 |
| WMS | medium | 34 | 0.555 | 126 | 9 | 0.79 | 1.266 | 0.676 | 1.219 |
| MS | medium | 35 | 0.573 | 138 | 11 | 1.06 | 0.943 | 0.353 | 0.617 |
| | | | | | | | | | |
| APS | high | 72 | 0.872 | 168 | 60 | 0.91 | 1.099 | 0.699 | 0.801 |
| PS | high | 81 | 0.988 | 188 | 75 | 1.10 | 0.909 | 0.509 | 0.516 |
| WMS | high | 64 | 0.770 | 154 | 42 | 0.71 | 1.408 | 0.818 | 1.064 |
| MS | high | 67 | 0.808 | 170 | 52 | 0.98 | 1.020 | 0.430 | 0.533 |

The products are analyzed in the following manner. The intrinsic viscosity (IV) is determined in a known manner with a viscotek Y501B with 1M NaOH as solvent and expressed in dl/g. The content of carboxyl groups (DS$_{COOH}$) is expressed in the number of moles carboxyl per mole anhydroglucose unit (DScarboxyl). The DS$_{COOH}$ is determined titrimetrically. To that end, the sample is brought into the H$^+$ form with 1N HCl and than poured in methanol. After decanting the powder is filtered, washed (Cl free), dried and then titrated to pH 9.0 with 0.1 M NaOH.

## Claims

1.   A process for preparing a starch product, which has in aqueous solution or dispersion an intrinsic viscosity (IV), which process comprises extruding a starch or a derivative thereof comprising at least 95 wt.%, based on dry substance, of amylopectin, using a specific mechanical energy input (SME) $\leq 1.32 * (1/IV_{product} - 1/IV_{starch})$.

2. A process according to claim 1, wherein the starch comprises at least 98 wt.%, based on dry substance, of amylopectin.

3. A process according to claim 1 or 2, wherein the starch is a root or tuber starch.

4. A process according to claim 3, wherein the starch is potato starch or tapioca starch.

5. A process according to any of the preceding claims, wherein SME $\leq 1.27 * (1/IV_{product} - 1/IV_{starch})$.

6. A process according to any of the preceding claims, wherein the starch is converted by etherification, esterification, oxidation, hydrolysis or cross-linking during extrusion.

7. A starch product obtainable by any of the preceding claims.

European Patent Office

**EUROPEAN SEARCH REPORT**

Application Number

EP 00 20 1399

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WILLETT J L ET AL: "Extrusion of waxy maize starch: melt rheology and molecular weight degradation of amylopectin" POLYMER,GB,ELSEVIER SCIENCE PUBLISHERS B.V, vol. 38, no. 24, 1 November 1997 (1997-11-01), pages 5983-5989, XP004092634 ISSN: 0032-3861 | 1,2,4,7 | C08B30/06 C08B30/20 C08B35/00 C08B35/02 C08B35/04 C08B35/06 C08B35/08 |
| Y | * page 5984, left-hand column * * page 5987, right-hand column * * Abstract * * page 5989, left-hand column * | 6 | |
| X | WO 97 00620 A (CERESTAR USA INC) 9 January 1997 (1997-01-09) * page 6, line 27-36; claim 1; example 1 * | 1-5,7 | |
| Y | GB 1 008 042 A (CORN PRODUCTS CO.) 22 October 1965 (1965-10-22) * page 1, line 76-79; claim 1; examples I-VIII * | 6 | |
| A | EP 0 769 501 A (UNILEVER PLC) 23 April 1997 (1997-04-23) * page 4, line 1-5; claims 1,2,7,8; table 5 * | 1-5,7 | TECHNICAL FIELDS SEARCHED (Int.Cl.7) C08B |

The present search report has been drawn up for all claims

| Place of search | Date of completion of the search | Examiner |
|---|---|---|
| MUNICH | 26 September 2000 | Radke, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 00 20 1399

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2000

| Patent document cited in search report | | Publication date | Patent family member(s) | | Publication date |
|---|---|---|---|---|---|
| WO 9700620 | A | 09-01-1997 | NONE | | |
| GB 1008042 | A | | NONE | | |
| EP 0769501 | A | 23-04-1997 | AU | 699551 B | 10-12-1998 |
| | | | AU | 6811396 A | 24-04-1997 |
| | | | CA | 2186432 A | 21-04-1997 |

EPO FORM P0459

For more details about this annex : see Official Journal of the European Patent Office, No. 12/82